# EUROPEAN PATENT APPLICATION

(11) **EP 1 431 924 A2**
(43) Date of publication of application: **23.06.2004**
(21) Application number: 03029208.0
(22) Date of filing: 18.12.2003
(51) Int. Cl.: G07B 7/00, G01G 19/00

(54) **Method and system for automatic generation of indicia labels in a mail processing system**

(30) Priority: 19.12.2002 US 325339
(71) Applicant: PITNEY BOWES INC., Stamford, CT 06926-0700 (US)
(72) Inventor: Salomon, James A., Cheshire CT 06410 (US)
(74) Representative: HOFFMANN - EITLE

(57) **Abstract**

A mailing machine (10) having a continuous feed function that automatically generates an indicia label based on physical attributes of a mail piece is disclosed. The weight of a mail piece is determined utilizing, for example, either differential weighing or single mail piece weighing. If the determined weight does not exceed a predetermined threshold limit, the mail piece can be fed into a processing path (52) of the mail processing system and an indicium evidencing payment of postage can be printed directly on the mail piece. If the determined weight of the mail piece, or the determined thickness or width of the mail piece, exceeds a predetermined threshold limit, the mailing machine will automatically print the indicium for the mail piece on a tape.

## Description

The invention disclosed herein relates generally to mail processing systems, and more particularly to a mailing machine having a continuous feed function that automatically generates an indicia label based on physical attributes of a mail piece.

Mail processing equipment, such as, for example, a mailing machine, often includes different modules that automate the process of producing mail pieces. The typical mailing machine includes a variety of different modules or sub-systems each of which performs a different task on the mail piece. The mail piece is conveyed downstream utilizing a transport mechanism, such as rollers or a belt, to each of the modules. Such modules could include, for example, a singulating module, i.e., separating a stack of mail pieces such that the mail pieces are conveyed one at a time along the transport path, a moistening/sealing module, i.e., wetting and closing the glued flap of an envelope, an integral weighing module, and a metering module, i.e., applying evidence of postage to the mail piece. The exact configuration of the mailing machine is, of course, particular to the needs of the user.

One of the factors that determines the cost for shipping a mail piece to a destination is the weight of the mail piece. A mail piece could be, for example, an envelope, postcard, magazine, package, etc. The mailing machine will be provided with the weight of the mail piece, typically from an integral scale, an external scale coupled to the mailing machine, or user input. Based on the weight of the mail piece, the postage rate and service option for a selected carrier, as specified by the operator, the mailing machine will determine the cost to deliver the mail piece to the destination. The mailing machine will then conduct an accounting procedure for the cost of shipping the mail piece and print an indicium evidencing payment of the postage. Mailing machines have traditionally been capable of printing postage indicia either directly on mail pieces, or on pieces of tape or a label, which are then attached to mail pieces.

One method for determining the weight of a mail piece is referred to as a differential weighing method as disclosed in United States Patent Number 5,001,648 to which reference is hereby made. In accordance with the differential weighing method, a plurality of mail pieces are placed on a scale coupled to a mailing machine and the collective weight of the mail pieces is registered. When a mail piece is removed from the scale, the difference between the original collective weight of the mail pieces and the new collective weight of the mail pieces remaining on the scale is determined. The cost for shipping of the mail piece is calculated based on the determined differential weight.

There are problems, however, with conventional mailing machines that utilize differential weighing. For example, there is still significant manual processing required by the operator. The operator must remove the mail piece from the scale, and if an indicium label is printed by the mailing machine, the operator must affix the label to the mail piece. This can add a significant amount of time to mail piece processing, thereby decreasing the efficiency of processing mail pieces in this manner. To overcome this deficiency, a continuous feeding process has been utilized. In the continuous feeding process, the mail piece removed from the scale can be fed through the mailing machine and the mailing machine can print the indicium directly on the mail piece. Thus, the time and labor required to manually affix a label to the mail piece is removed. This type of processing, however, also has shortcomings. For example, the operator must select whether the continuous feeding process will be performed, or if the mailing machine should print a label. If a selection is made for each individual mail piece, the processing time will be significantly increased as the mailing machine waits for and processes each selection made by the operator. If the continuous feeding process is selected for all mail pieces, there is a risk that the operator will attempt to feed a mail piece into the mailing machine that will cause a jam in the processing path of the mailing machine. For example, a mail piece that is too thick, too wide, or too heavy may not be able to be processed by the mailing machine. If a mail piece becomes jammed in the mailing machine, the processing of mail pieces must be stopped until the jam is cleared, thereby significantly decreasing the efficiency of the mailing machine. In addition, if a mail piece becomes jammed and the indicium is not printed on the mail piece, there is a risk that the monetary value associated with the indicium intended to be printed on the jammed mail piece will be lost. Even if a thick or heavy mail piece is able to be processed, the print quality of the indicium on a thick mail piece may be so poor, due to the bulging of the mail piece, so as to render the indicium illegible. If the indicium is illegible, the mail piece may be returned to the sender, and the postage value associated with the indicium may be lost.

Thus, there exists a need for a method and system that allows a mailing machine to operate in a continuous feed mode while substantially reducing the risk of jamming the processing path and/or printing illegible indicia.

The instant invention provides from one aspect a method of operating a mail processing system to process a mail piece, the mail processing system printing an indicia for the mail piece comprising determining the weight of the mail piece, determining if the determined weight of the mail piece exceeds a predetermined weight threshold, and if the determined weight does exceed the predetermined weight threshold, automatically printing the indicia on a tape for affixing to the mail piece.

The instant invention provides from another aspect, a mail processing system comprising means for determining the weight of the mail piece, means for determining if the determined weight of the mail piece exceeds a predetermined weight threshold, and means for automatically printing the indicia on a tape for affixing to the mail piece if the determined weight does exceed the predetermined weight threshold.

The instant invention provides from another aspect, a mail processing system comprising a scale for determining a weight of a mail piece, a printer for printing an indicia for the mail piece, the printer adapted to print the indicia for the mail piece either directly on the mail piece or on a tape, a tape drive, and a processor arranged to control the printer and the tape drive, the processor being further arranged to determine if the weight of the mail piece exceeds a predetermined weight threshold and, if the weight of the mail piece does exceed the predetermined weight threshold, the processor being arranged to automatically activate the tape drive to provide tape to the printer and activate the printer to print the indicia for the mail piece on the tape.

As will be further described, the problems associated with the prior art are alleviated by a method and system that allows a mailing machine to operate in a continuous feed mode while substantially reducing the risk of jamming the processing path and/or printing illegible indicia.

In operation, a mail processing system is arranged to operate continuously in a weigh and feed mode. The weight of a mail piece is determined utilizing, for example, either differential weighing or single mail piece weighing. If the determined weight does not exceed a predetermined threshold limit, the mail piece can be fed into a processing path of the mail processing system for printing an indicium evidencing payment of postage directly on the mail piece. If the determined weight of the mail piece exceeds the predetermined threshold limit, the mailing machine will automatically print the indicium for the mail piece on a tape. Preferably, an indication is made to the operator that a tape was printed and the mail piece should not be fed into the processing path of the mail processing system. Optionally, the mailing machine can also determine the thickness and/or width of the mail piece, and if the determined thickness or width of the mail piece exceeds a predetermined threshold limit, the mailing machine will halt the processing of the mail piece through the processing path of the mail processing system and automatically print the indicium for the mail piece on a tape. Thus, the operator does not need to make a selection between printing on the mail piece or the tape for each mail piece, thereby increasing the processing speed. In addition, the risk of an operator entering a mail piece that will jam the mail processing system, or a mail piece upon which the indicium may be illegibly printed, into the processing path of the mail processing system is substantially reduced.

Therefore, it should now be apparent that the invention substantially achieves all the above aspects and advantages. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

The accompanying drawings illustrate presently preferred embodiments of the invention, and together with the general description given above and the detailed description given below, by way of example serve to explain the invention in more detail. As shown throughout the drawings, like reference numerals designate like or corresponding parts.

FIG. 1 illustrates in block diagram form a mail processing system forming an embodiment of the present invention.

FIG. 2 illustrates in flow chart form the processing performed by the mail processing system of Fig. 1.

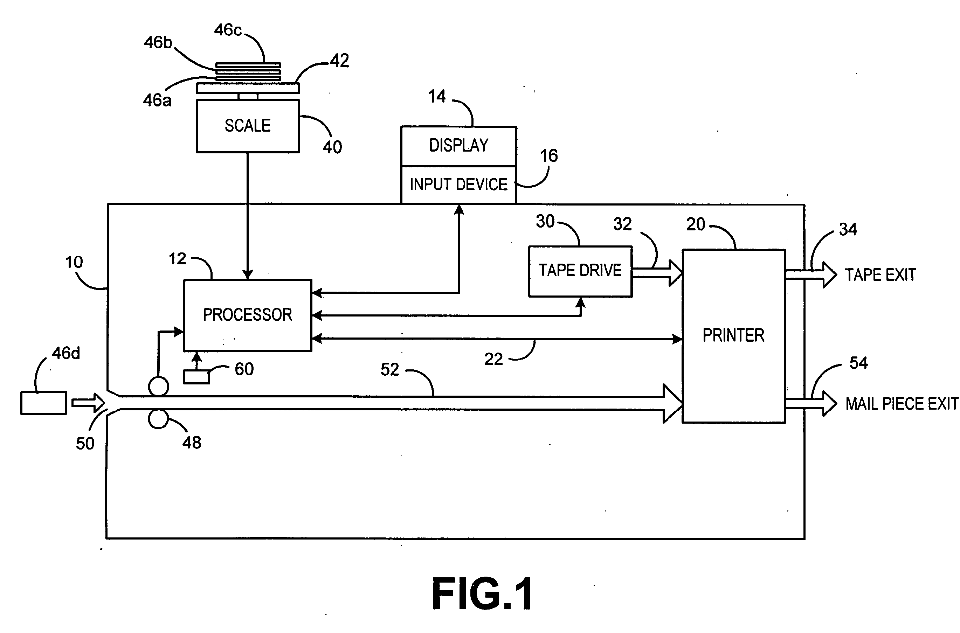

In describing the present invention, reference is made to the drawings, wherein there is seen in Fig. 1 in block diagram form a mail processing system 10, such as, for example, a mailing machine, forming an embodiment of the present invention. While the present invention will be described with respect to a mailing machine 10, it should be understood that the present invention is not so limited and could be used with any type of mail processing system, such as, for example, an inserter system, in which an indicia for a mail piece is printed. Mailing machine 10 includes a processor 12. Processor 12 may be integral to the mailing machine 10, or may be a separate device coupled to the mailing machine 10. A display 14 and input device 16, such as, for example, a keyboard, are coupled to the processor 12. Optionally, the display 14, input device 16 and processor 12 may be combined in a single integrated unit coupled to the mailing machine 10. The processor 12, display 14 and input device 16 in combination perform the user interface and controller functions for the mailing machine 10. Specifically, they provide user interfaces, execute control of the mailing machine 10 and print operations performed by printer 20, calculate postage for debit based upon rate tables, provide the conduit for the Postal Security Device (PSD) (not shown) to transfer postage indicia to the printer 20 via communication link 22, operate with peripherals for accounting and weighing, and conduct communications with a data center for postage funds refill, software download, rates download, and market-oriented data capture. The processor 12, in conjunction with an embedded PSD, provides the system meter that satisfies U.S. and international postal regulations regarding closed system information-based indicia postage (IBIP) meters.

A scale 40 is coupled to processor 12. Scale 40 may be integral with the mailing machine 10 or may be a separate component interfaced with the mailing machine by an interface connection, such as, for example, a USB interface or an RS232 interface. Scale 40 can provide the weight of an object on the scale 40 to processor 12, or could provide a representative signal to processor 12 from which the processor 12 will determine the weight of the object.

Mailing machine 10 includes a feeding area 50 and a processing path 52. A mail piece, such as, for example, mail piece 46d, can be input to the feeding area 50. The movement of the mail piece 46d along the processing path 52 can be controlled by one or more pairs of drive/idler rollers, such as roller pair 48, and/or by one or more belts (not shown) that move the mail piece 46d through the mailing machine 10 along processing path 52 to the printer 20. Printer 20 can print a postage indicium, generated by processor 12, onto the mail piece 46d. The mail piece 46d will then exit the mailing machine at the mail piece exit 54. Mailing machine 10 further includes a tape drive 30 coupled to the processor 12. As further described below, tape drive 30 can provide a tape or other type of adhesive label (hereinafter collectively referred to as tape) to printer 20 under specified conditions, along processing path 32, upon which a postage indicium can be printed instead of printing the postage indicium on the mail piece 46d. The tape exits the mailing machine 10 at tape exit 34 and can then be affixed to mail piece 46d.

The operation of the mailing machine 10 is as follows. Preferably, the operator can configure the mailing machine 10 to operate in a continuous weigh and feed mode. One weighing mode is a differential weighing mode. In this weighing mode, a plurality of mail pieces 46a, 46b, 46c and 46d are placed on the platform 42 of scale 40. Mail pieces 46a-46d may be different sizes and/or weights. Optionally, the mail pieces 46a-46d may be placed in a bin (not shown) on the platform 42. The collective weight of all the mail pieces 46a-46d is determined by scale 40 and can be sent to processor 12. Alternatively, a signal representative of the force imparted on the platform 42 of scale 40 by the mail pieces 46a-46d is sent to processor 12, which then determines the weight of the mail pieces 46a-46d.

When a mail piece, such as, for example, mail piece 46d, is removed from the platform 42 of scale 40, a new collective weight of the remaining mail pieces 46a-46c is determined (either by the scale 40 or processor 12). The difference between the original collective weight and the new collective weight is used as the actual weight of the mail piece 46d. This differential calculation can be performed by the scale 40, such that scale 40 provides the processor 12 with the actual weight of mail piece 46d (or a signal representative of the actual weight of mail piece 46d). Alternatively, the differential calculation can be performed by the processor 12 from the original collective weight and the new collective weight provided by the scale 40. Once the actual weight of the mail piece 46d is known by the processor 12, processor 12 can generate a postage indicium for the mail piece 46d for printing by the printer 20 as described below.

Alternatively, the mailing machine 10 need not operate in a differential weighing mode, but instead can operate in a single mail piece weighing mode. In this mode, only a single mail piece, such as, for example, mail piece 46d, is placed on the platform 42 of scale 40. The weight of mail piece 46d is then determined (either by the scale 40 or the processor 12). The processor 12 generates a postage indicium for the mail piece 46d for printing by the printer 20 as described below. The mail piece 46d is removed from the scale 40 and another mail piece can be placed on the platform 42 of scale 40. Thus, each mail piece 46a-46d is placed one at a time on the platform 42 of scale 40 and the weight of the single mail piece is determined.

As noted above, the mailing machine 10 is preferably configured to operate in a continuous feed mode, i.e., the operator does not have to select for each mail piece, such as, for example, mail pieces 46a-46d, whether the postage indicium will be printed on the mail piece or on a tape for affixing to the mail piece. Thus, the mailing machine 10 will run in the feed mode, i.e., a mail piece will be put into the feed area 50 to be processed along processing path 52 and printed upon by printer 20, unless the physical attributes of the mail piece exceed one or more predetermined threshold levels. For example, if the mail piece exceeds a predetermined weight threshold, then the processor 12 will automatically activate the tape drive 30 to feed a tape to printer 20. The postage indicium will then be printed on the tape. Additionally, if the mailing machine 10 is capable of determining the thickness and/or width of mail pieces, and a mail piece exceeds a predetermined thickness or width threshold, then the processor 12 will automatically activate the tape drive 30 to feed a tape to printer 20. The postage indicium will then be printed on the tape.

Typically, the thickness of a mail piece is directly proportional to its weight. Thus, for example, a heavier mail piece is generally thicker than a lighter mail piece. The processing path 52 of mailing machine 10 is typically designed to handle mail pieces up to a certain thickness, such as, for example, mail pieces that are no more than 0.75 inches (19 mm) thick, and mail pieces less than a certain width, such as, for example, no wider than 13 inches (330 mm). Of course, the actual maximum thickness or width for a mail piece that can be processed by mailing machine 10 is a matter of design choice and can be configured based on the actual usage of the mailing machine 10. Thus, the predetermined weight threshold could be, for example, 2 or 3 Ibs. A weight less than the predetermined weight threshold would typically indicate that the thickness of a mail piece is not greater than the maximum thickness for a mail piece that can be processed by mailing machine 10. Suppose, for example, the weight of the mail piece 46d does not exceed the predetermined weight threshold. Based on the weight of the mail piece 46d, mailing machine 10 should be capable of processing the mail piece 46d, i.e., the mail piece 46d can be passed through the processing path 52 of mailing machine 10 to printer 20, and a postage indicium can be printed directly on the mail piece 46d.

In some cases, even though the weight of a mail piece does not exceed the predetermined threshold weight, it is possible that the thickness or width of the mail piece may still exceed the threshold limits and thus the mail piece can not be processed in the processing path 52 of mailing machine 10. For such situations, mailing machine 10 can optionally determine if the thickness and/or width of the mail piece exceeds a predetermined thickness or width threshold. For example, if the weight of mail piece 46d does not exceed the predetermined threshold weight, the mailing machine 10 can determine if the thickness of the mail piece 46d exceeds a predetermined thickness threshold. Such determination could be performed, for example, by sensors that measure the displacement of one or more of the rollers of the roller pair 48 as the mail piece 46d passes between the rollers. Alternatively, such determination could be performed by a sensor 60 located along the processing path 52. Sensor 60 could be, for example, an optical sensor that will send a signal to processor 12 if the mail piece 46d exceeds the predetermined thickness threshold. Similarly, the mailing machine 10 can also determine if the width of the mail piece 46d exceeds a predetermined width threshold. The width determination could be performed in addition to or in place of the thickness determination. Such width determination could also be performed by a sensor, similar to sensor 60, located along the processing path 52. If it is determined that the mail piece 46d does not exceed the thickness and/or width thresholds for mailing machine 10, the mail piece 46d can be passed through the processing path 52 of mailing machine 10 to printer 20, and a postage indicium can be printed directly on the mail piece 46d. If, however, it is determined that the thickness or the width of the mail piece 46d does exceed the thickness threshold or width threshold for mailing machine 10, processor 12 will halt the processing of the mail piece 46d via the processing path 52 and automatically activate the tape drive 30 to feed a tape to printer 20. The postage indicium will then be printed on the tape from the tape drive 30. The operator can then remove the mail piece 46d from the mailing machine 10 and affix the tape to the mail piece 46d.

Preferably, the thickness and/or width of the mail piece 46d is determined in or near the feed area 50, thereby preventing the mail piece 46d from completely entering the processing path 52 and facilitating removal of the mail piece 46d by the operator. Preferably, an indication is made to the operator that the mail piece 46d exceeds the thickness and/or width threshold and that the mail piece 46d should be removed from the mailing machine 10. Such indication could be, for example, an audio or visual indication by display 14. Alternatively, the indication could be as simple as one or more of the mailing machine 10 halting the processing of the mail piece 46d in processing path 52, the printer 20 printing on the tape, and the tape exiting the mailing machine 10 at tape exit 34.

Now suppose, for example, it is determined that the weight of the mail piece 46d does exceed the predetermined weight threshold. Based on the weight of the mail piece 46d, the size of the mail piece 46d may be such that mailing machine 10 may not be capable of processing the mail piece 46d. Based on the weight of mail piece 46d exceeding the predetermined weight threshold, processor 12 will automatically activate the tape drive 30 to feed a tape to printer 20. The postage indicium will then be printed on the tape from the tape drive 30. The operator can then affix the tape to the mail piece 46d. Preferably, processor 12 will halt the operation of the processing path 52, such that even if the operator places the overweight mail piece 46d into the feed area 50 for intake to the processing path 52, the mail piece 46d will not be processed by the mailing machine 10. Preferably, an indication is made to the operator that the mail piece 46d exceeds the predetermined weight threshold similarly as described above.

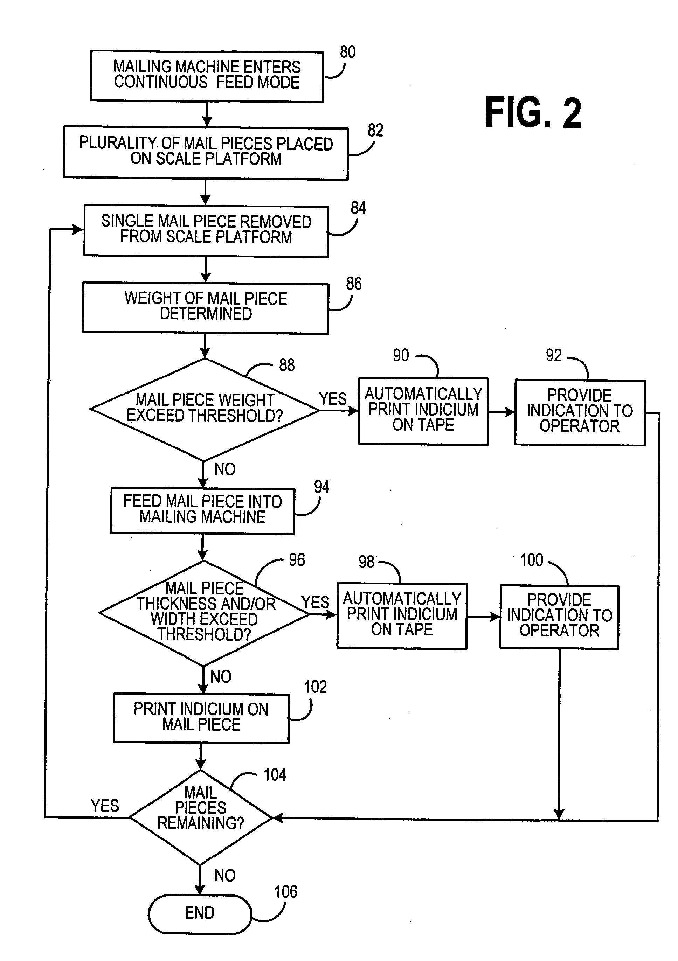

Referring now to Fig. 2, the processing according to one way of putting into effect the present invention performed by the mailing machine 10 of Fig. 1 is illustrated in flow chart form. In step 80, the mailing machine 10 is placed in a continuous feed mode. If a differential weighing mode is being utilized, then in step 82, a plurality of mail pieces, such as, for example, mail pieces 46a-46d are placed on the platform 42 of scale 40. In step 84, a single mail piece 46d is removed from the platform 42. In step 86, the weight of the mail piece 46d is determined utilizing a differential weighing method as previously described. The weight may be determined by the scale 40 or by the processor 12. Alternatively, if a single mail piece weigh mode is being utilized instead of a differential weigh mode, then steps 82 and 84 are combined into a single step in which only a single mail piece, such as, for example, mail piece 46d, is placed on the platform 42 of scale 40. In step 86, the weight of the single mail piece 46d is determined.

Once the weight of a mail piece, such as, for example, mail piece 46d is determined (either by differential weighing or single mail piece weighing) in step 86, then in step 88, it is determined if the weight of mail piece 46d exceeds a predetermined weight threshold. Such determination is preferably performed by processor 12. If in step 88 it is determined that the weight of mail piece 46d does exceed the predetermined weight threshold, then in step 90 the processor 12 will automatically activate the tape drive 30 to feed a tape to printer 20 and the postage indicium evidencing payment of postage for mail piece 46d will be printed on the tape. The tape can then be manually affixed to the mail piece 46d. Additionally in step 90, processor 12 can optionally halt any processing via processing path 52. Optionally, in step 92, an indication may be provided to the operator that the tape has been printed. Step 92 could be performed substantially simultaneously with step 90. The processing then proceeds to step 104 (described below).

If in step 88 it is determined that the weight of mail piece 46d does not exceed the predetermined weight threshold, then in step 94 the mail piece 46d will be fed into the feeding area 50 of the mailing machine 10 for processing by the mailing machine 10. Optionally, if mailing machine 10 is capable of determining the thickness and/or width of mail pieces, then in step 96 it is determined if the thickness and/or width of the mail piece 46d exceeds a predetermined thickness or width threshold, respectively. If the thickness and/or width of mail piece 46d does exceed the predetermined thresholds, then in step 98 the processor 12 will automatically activate the tape drive 30 to feed a tape to printer 20 and the postage indicium evidencing payment of postage for mail piece 46d will be printed on the tape. The tape can then be manually affixed to the mail piece 46d. Additionally in step 98, processor 12 preferably will halt any further processing of mail piece 46d via processing path 52. Optionally, in step 98 the processor 12 can cause the mail piece 46d to be automatically ejected from the processing path 52. Optionally, in step 100, an indication may be provided to the operator that the tape has been printed and, if the mail piece 46d has not already been ejected from the processing path 52, that the operator should remove the mail piece 46d from the mailing machine 10. Step 100 could be performed substantially simultaneously with step 98. The processing then proceeds to step 104 (described below).

If in step 96 it is determined that the thickness and/or width of mail piece 46d does not exceed the predetermined thresholds, or if step 96 is not performed, then in step 102 the mail piece 46d is passed to printer 20 via processing path 52 and the postage indicium evidencing payment of postage for mail piece 46d will be printed on the mail piece 46d. The mail piece 46d, imprinted with the indicium, will then exit the mailing machine 10 at the mail piece exit 54. In step 104 it is determined if there are any mail pieces remaining to be processed. This can be performed automatically in the differential weighing mode, for example, by determining if the weight registered by scale 40 exceeds a predetermined minimum threshold. If it is determined that there are still mail pieces remaining on the platform 42 of scale 40, then the method proceeds back to step 84 for processing of the next mail piece. If it is determined that there are no more mail pieces on the platform 42 of scale 40, then in step 106 the processing of mail pieces ends. In the single mail piece weighing mode, this can be performed by determining if there is another mail piece on the platform 42 of scale 40, or by indicating to the operator to place another mail piece on the platform 42 of scale 40 for processing.

Thus, mailing machine 10 can operate in a continuous weigh and feed mode while substantially reducing the risk of jamming the processing path and/or printing illegible indicia. If one or more physical attributes, such as, for example, weight, thickness, or width, of the mail piece exceeds a predetermined threshold limit, the mailing machine will automatically print an indicium evidencing payment of postage for the mail piece on a tape. The tape can then be affixed to the mail piece. If the physical attributes do not exceed predetermined threshold limits, the mail piece can be fed into a processing path of the mailing machine 10 and the indicium can be printed directly on the mail piece. Thus, the selection between printing on the mail piece or a tape is performed automatically by the mailing machine and the operator does not need to make this selection for each mail piece, thereby increasing the processing speed. In addition, the risk of an operator entering a mail piece that will jam the mail processing system, or a mail piece upon which the indicium may be illegibly printed, into the processing path of the mail processing system is substantially reduced.

While preferred embodiments of the invention have been described and illustrated above, it should be understood that these are exemplary of the invention and are not to be considered as limiting. Accordingly, the invention is not to be considered as limited by the foregoing description but is only limited by the scope of the appended claims.

## Claims

1. A method of operating a mail processing system to process a mail piece, the mail processing system printing an indicia for the mail piece, the method comprising:
determining the weight of the mail piece;
determining if the determined weight of the mail piece exceeds a predetermined weight threshold; and
if the determined weight does exceed the predetermined weight threshold, automatically printing the indicia on a tape for affixing to the mail piece.

2. The method according to claim 1, wherein determining the weight of the mail piece further comprises:
determining the weight of the mail piece utilizing differential weighing.

3. The method according to claims 1 or 2, wherein if the determined weight does exceed the predetermined weight threshold, the method further comprises:
providing a signal indicating the determined weight exceeds the predetermined weight threshold.

4. The method according to any one of the preceding claims, wherein if the determined weight does exceed the predetermined weight threshold, the method further comprises:
halting operation of a mail piece processing path of the mail processing system.

5. The method according to any one of the preceding claims, wherein automatically printing the indicia on a tape further comprises:
automatically activating a tape drive to feed the tape to a printer in the mail processing system.

6. The method according to any one of the preceding claims, wherein if the determined weight does not exceed the predetermined weight threshold, the method further comprises:
inputting the mail piece to a mail piece processing path;
determining if the mail piece exceeds a predetermined thickness or width threshold;
if the mail piece does not exceed the predetermined thickness or width threshold, continuing to process the mail piece through the mail piece processing path and printing the indicia directly on the mail piece; and
if the mail piece does exceed the predetermined thickness or width threshold, halting operation of the mail piece processing path and automatically printing the indicia on a tape for affixing to the mail piece.

7. The method according to claim 6, wherein if the mail piece does exceed the predetermined thickness or width threshold, the method further comprises:
providing a signal indicating the mail piece exceeded the predetermined thickness or width threshold.

8. A mail processing system comprising:
means for determining the weight of the mail piece;
means for determining if the determined weight of the mail piece exceeds a predetermined weight threshold; and
means for automatically printing the indicia on a tape for affixing to the mail piece if the determined weight does exceed the predetermined weight threshold.

9. The mail processing system according to claim 8, wherein the means for determining the weight further comprises:
a scale operating in a differential weighing mode.

10. The mail processing system according to claim 8, wherein the means for determining the weight further comprises:
a scale operating in a single mail piece weighing mode.

11. The mail processing system according to any one of the preceding claims, further comprising:
means for providing a signal indicating the determined weight exceeds the predetermined weight threshold.

12. The mail processing system according to any one of the preceding claims, further comprising:
means for automatically halting a mail piece processing path of the mail processing system if the determined weight does exceed the predetermined weight threshold.

13. The mail processing system according to any one of the preceding claims, further comprising:
means for automatically feeding the tape to a printer in the mail processing system to print the indicia on the tape.

14. The mail processing system according to any one of the preceding claims, further comprising:
means for processing the mail piece through the mail processing system;
means for determining if the mail piece exceeds a predetermined thickness or width threshold;
means for continuing the processing of the mail piece through the mail processing system and printing the indicia directly on the mail piece if the mail piece does not exceed the predetermined thickness or width threshold; and
means for automatically halting operation of the processing of the mail piece through the mail processing system and automatically printing the indicia on a tape for affixing to the mail piece if the mail piece does exceed the predetermined thickness or width threshold.

15. The mail processing system according to claim 14, further comprising:
means for providing a signal indicating the mail piece exceeded the predetermined thickness or width threshold.
